# EUROPÄISCHE PATENTANMELDUNG

(11) **EP 2 871 335 A1**
(43) Veröffentlichungstag der Anmeldung: **13.05.2015**
(21) Anmeldenummer: 13192141.3
(22) Anmeldetag: 08.11.2013
(51) Int. Cl.: F01K 9/00, F01K 11/02

(54) **Modul zur Kondensation von Wrasendampf und zur Kühlung von Turbinenabwasser**

(71) Anmelder: Siemens Aktiengesellschaft, 80333 München (DE)
(72) Erfinder: Bergmann, Peter, 45966 Gladbeck (DE); Dhima, Rachid, 45145 Essen (DE); Guntermann, Svea, 45475 Mülheim an der Ruhr (DE); Leu, Bernd, 40670 Meerbusch (DE); Naskidashvili, Kakhi, 45147 Essen (DE); Riemann, Stefan, 41564 Kaarst (DE)

(57) **Zusammenfassung**

Die Erfindung betrifft ein Modul für eine thermische Kraftanlage zur Kondensation von Wrasendampf und zur Kühlung von aus einer Turbinenentwässerung stammendem Turbinenabwasser. Das Modul weist dabei insbesondere eine erste Einheit (1) auf, die ausgebildet ist Wrasendampf zu kondensieren und eine zweite Einheit (10), die ausgebildet ist, das Turbinenabwasser zu kühlen, wobei in der ersten Einheit (1) anfallendes Kondensat an die zweite Einheit (10) übergeben werden kann.

## Beschreibung

Für eine ordnungsgemäße Funktion einer Dampfturbine in einer thermischen Kraftanlage sind ein Wellendichtdampfsystem und ein Entwässerungssystem notwendig.

Das Wellendichtdampfsystem hat die Aufgabe Lufteintritt in die Dampfturbine wie auch Dampfaustritt aus der Dampfturbine in ein Maschinenhaus zu verhindern. Aus diesem Grund wird Luft und Dampf kontrolliert aus dem Wellendichtdampfsystem abgesaugt. Das dabei angesaugte Luft-Dampf-Gemisch, welches als Wrasendampf bezeichnet wird, wird zu einem Wrasendampfkondensator geführt. Dort kondensiert der Dampfanteil des Wrasendampfs. Das entstehende Kondensat wird zu einem Hauptkondensator der thermischen Kraftanlage geführt. Die Luft wird in die Atmosphäre geleitet. Soweit von Atmosphäre gesprochen wird, ist damit primär gemeint, dass die Luft in einen Bereich abgegeben wird, in dem weitgehend Atmosphärendruck besteht. Dies kann etwa ein Maschinenhaus der thermischen Kraftanlage sein. Um den Wrasendampfkondensator besser in einen Kühlkreislauf der thermischen Kraftanlage einbinden zu können ist der Wrasendampfkondensator auf die vorhandene Kühlwassermenge ausgelegt.

Das Entwässerungssystem hat die Aufgabe in der Dampfturbine anfallendes Wasser abzuleiten. Dieses Wasser enthält noch Dampf, welcher aus dem Wasser zu entfernen beziehungsweise zu kondensieren ist. An dieser Stelle soll erwähnt werden, dass im Rahmen dieser Anmeldung unter Wasser, wenn nichts anderes erwähnt ist, flüssiges Wasser zu verstehen ist und unter Dampf Wasserdampf.

Aufgabe der Erfindung ist einen vereinfachter Aufbau für die oben genannten Anforderungen, nämlich Turbinenentwässerung und Wrasendampfkondensation bereitzustellen.

Diese Aufgabe wird mit den Merkmalen des unabhängigen Anspruchs gelöst. Abhängige Ansprüche geben vorteilhafte Weiterentwicklungen an.
Zur Lösung der Aufgabe wird ein Modul für eine thermische Kraftanlage zur Kondensation von Wrasendampf und zur Kühlung von aus einer Turbinenentwässerung stammendem Turbinenabwasser vorgeschlagen. Durch ein derartiges Modul, welches die beiden Funktionen erfüllt, kann der Bauaufwand reduziert werden. Wie eingangs geschildert ist es im Stand der Technik üblich, den Wrasendampfkondensator auf die vorhandene Wassermenge im Kühlreislauf auszulegen. Damit wurde der Wrasendampfkondensator regelmäßig überdimensioniert. Durch ein gemeinsames Modul für die Wrasendampfkondensation und die Kühlung des Turbinenabwassers kann dieser Nachteil beseitigt werden. Günstig hierbei ist, dass bei der Wrasendampfkondensation gewonnenes Kondensat zur Kühlung des Turbinenabwassers genutzt werden kann. Es ist somit möglich lediglich für die Wrasendampfkondensation Kühlwasser bereitzustellen. Eine zusätzliche Bereitstellung von Kühlwasser für die Kühlung des Turbinenabwassers wird entbehrlich.

Zur Umsetzung ist eine erste Einheit des Moduls ausgebildet Wrasendampf zu kondensieren und eine zweite Einheit ausgebildet, das Turbinenabwasser zu kühlen, wobei in der ersten Einheit anfallendes Kondensat an die zweite Einheit übergeben werden kann. Dabei ist günstig, dass in der ersten Einheit die Kondensation des Wrasendampfs weitgehend ohne Berücksichtigung der Kühlung des Turbinenabwassers erfolgen kann. Durch die Möglichkeit das anfallende Kondensat an die zweite Einheit zu übergeben, in der die Kühlung des Turbinenabwassers erfolgt, kann ein Synergieeffekt zwischen den beiden Einheiten verwirklicht werden. Insbesondere zum Verständnis nachfolgender Ausführungen soll nicht unerwähnt bleiben, dass die zweite Einheit im Regelfall einen oberen und einen unteren Bereich aufweist.

In einer Ausführungsform des Moduls dient zur Übergabe von Kondensat aus der ersten Einheit in die zweite Einheit eine Kondensatleitung, wobei insbesondere ein Kondensomat in der Kondensatleitung vorhanden ist. Auf diese Weise kann das Kondensat gut übergeben werden.

In einer Ausführungsform des Moduls ist die erste Einheit von Kühlwasser durchströmbar, insbesondere von Kühlwasser, das für Standrohre eines Hauptkondensators der thermischen Kraftanlage vorgesehen ist. Unter dem Hauptkondensator ist dabei derjenige Kondensator zu verstehen, in dem der aus der Dampfturbine, genauer gesagt aus dem zuletzt durchströmten Teil der Dampfturbine ausströmende Dampf kondensiert wird. Das gewonnene Kondensat wird als Speisewasser genutzt, welches wiederum erwärmt und verdampft werden soll.

In einer Ausführungsform des Moduls kann Kühlwasser nach Durchströmung der ersten Einheit in der zweiten Einheit genutzt werden kann, insbesondere zur Einspritzung in die zweite Einheit. Die Einspritzung erfolgt dabei bevorzugt in einem oberen Bereich der zweiten Einheit. Soweit oben ausgeführt worden ist, dass für die Kühlung des Turbinenabwassers kein zusätzliches Kühlwasser bereitzustellen ist, ist bei dieser Ausführungsform die Aussage dahingehend zu präzisieren, dass Kühlwasser, welches bereits für die Wrasendampfkondensation genutzt worden ist, nochmals für die Kühlung des Turbinenabwassers eingesetzt werden kann.

In einer Ausführungsform des Moduls ist in der ersten Einheit ein Auslass vorhanden, durch den mit dem Wrasendampf in die erste Einheit mitgeführte Luft nach der Kondensation des Wrasendampfs abgeführt werden kann, insbesondere in die Atmosphäre. Im Wrasendampf ist eine beträchtliche Menge Luft enthalten. Während der enthaltene Dampf kondensiert werden kann und das Kondensat etwa wieder als Speisewasser genutzt werden kann, ist die Luft abzuführen. Die Luft wird dabei bevorzugt in die Atmosphäre abgegeben. Wie eingangs dargelegt, bedeutet dies beispielsweise die Luft in das Maschinenhaus abzuführen. Der Auslass in der ersten Einheit ist normalerweise in einem oberen Bereich der ersten Einheit angebracht.

In einer Ausführungsform des Moduls weist die zweite Einheit einen Einlass für Turbinenabwasser auf, welcher insbesondere im oberen Bereich der zweiten Einheit angeschlossen ist. Damit kann das zu kühlende Turbinenabwasser von oben nach unten durch die zweite Einheit strömen und dabei gekühlt werden.

In einer Ausführungsform des Moduls ist aus der zweiten Einheit ein Auslass zum Hauptkondensator vorhanden, wobei der Auslass insbesondere in einem unteren Bereich der zweiten Einheit angeschlossen ist. Damit kann das gekühlte Turbinenabwasser, in dem der mitgerissene Dampf dank der Kühlung kondensiert ist, zum Hauptkondensator gelangen. Neben dem Turbinenabwasser kann gegebenenfalls auch eingeführtes Kondensat aus der ersten Einheit sowie eingeführtes Kühlwasser mit abgeführt werden. Der Hauptkondensator weist im Regelfall einen Auffangbehälter auf, aus dem über Hauptkondensatpumpen kondensierter Dampf dem Kesselspeisewasser zugeführt werden kann. Das Turbinenabwasser kann mithin bevorzugt in den Auffangbehälter geführt werden und von dort dem Kesselspeisewasser zugeführt werden. Zur Führung des Turbinenabwassers zum Hauptkondensator, also meist in den Auffangbehälter, ist es häufig sinnvoll, eine Pumpe vorzusehen. Damit kann bei Bedarf der Auslass zum Hauptkondensator geodätisch unterhalb des Hauptkondensators liegen. Auch kann eine Pumpe einer geregelten Abfuhr des gekühlten Turbinenabwassers dienen.

In einer Ausführungsform des Moduls ist eine dem Druckausgleich zwischen der zweiten Einheit und dem Hauptkondensator dienende Verbindungsleitung vorhanden, wobei die Verbindungsleitung insbesondere im oberen Bereich der zweiten Einheit angeschlossen ist. Damit kann erreicht werden, dass in der zweiten Einheit und im Hauptkondensator derselbe Druck besteht.

Anhand einer Figur, welche schematisch ein erfindungsgemäßes Modul zeigt, soll nachfolgend die Erfindung näher beschrieben werden.
Zu erkennen ist eine erste Einheit 1, die einen Wärmeübertrager 2 für die Wrasendampfkondensation umfasst. Durch eine Kühlwasserzufuhrleitung 3 wird Kühlwasser in die erste Einheit 1, genauer gesagt in den Wärmeübertrager 2 für die Wrasendampfkondensation gefördert. Der Wrasendampf wird über eine Wrasendampfzufuhrleitung 4 zugeführt. Durch den Wärmeaustausch im Wärmeübertrager 2 wird der Wrasendampf gekühlt. Damit tritt eine Kondensation ein. Die bei der Kühlung des Wrasendampfs und vor allem bei der Kondensation freiwerdende Wärme wird an das Kühlwasser übergeben. Das Kühlwasser fließt durch eine Kühlwasserabfuhrleitung 5 zu einem Standrohr. Im Wrasendampf enthaltene Luft wird durch eine als Auslass dienende Luftabfuhrleitung 6 abgesaugt und in einen Maschinenraum der thermischen Kraftanlage geführt. Zum Absaugen dient ein Gebläse 7, welches in der Luftabfuhrleitung 6 angeordnet ist.

Das in der ersten Einheit 1 entstehende Kondensat wird über eine Kondensatleitung 8 mit Hilfe eines in der Kondensatleitung 8 angebrachten Kondensomaten 9 in eine zweite Einheit 2 geführt. Die zweite Einheit 10 umfasst im Wesentlichen einen Entwässerungstank 11. Die Kondensatleitung 8 mündet dabei in einen oberen Bereich der zweiten Einheit 10. Gegenüberliegend ist in der zweiten Einheit eine Turbinenabwasserzufuhrleitung 12 als Einlass für das Turbinenabwasser angeordnet. Durch die Turbinenabwasserzufuhrleitung 12 wird Turbinenabwasser, das, wie durch die Pfeile angedeutet, aus Turbinen der thermischen Kraftanlage stammt, in den Entwässerungstank 11 geführt. Im Entwässerungstank 11 strömt das Turbinenabwasser nach unten.

Ein Teil des aus der ersten Einheit 1 durch die Kühlwasserabfuhrleitung 5 abströmenden Kühlwassers wird abgezweigt und strömt durch eine Kühlwassereinspritzleitung 13, aus der es in den oberen Bereich des Entwässerungstanks 11 eingespritzt wird. Das eingespritzte Kühlwasser und das eingespritzte Kondensat sorgen dafür, dass das eingeleitete Turbinenabwasser im Entwässerungstank 11 gekühlt wird. Dadurch kondensiert der vom Turbinenabwasser mitgerissene Dampf, der zunächst im Turbinenabwasser noch enthalten ist. Das vom Dampf weitgehend befreite Turbinenabwasser, das eingespritzte Kühlwasser und das eingeleitete Kondensat sammeln sich in einem unteren Bereich des Entwässerungstanks 11. Von dort wird es durch eine als Auslass dienende Kondensatabfuhrleitung 14 mit Hilfe einer in der Kondensatabfuhrleitung 14 enthaltenen Pumpe 15 in einen nicht dargestellten Hauptkondensator der thermischen Kraftanlage gefördert. Eine an der Spitze des Entwässerungstanks 11 angeordnete Druckausgleichsleitung 16 ist ebenfalls mit dem Hauptkondensator verbunden und sorgt für einen Druckausgleich zwischen Entwässerungstank 11 und Hauptkondensator, so dass der Entwässerungstank 11 auf dem Druck des Hauptkondensators liegt.

Der Wärmeübetrager 2 im oben beschriebenen Modul kommt in einer üblichen thermischen Kraftanlage im Leitungbesreich mehrere 100 MW mit einer Leistung von maximal 600 kW aus. Eine Grädigkeit von 10 K genügt. Es wird maximal 15 kg/s Kühlwasser benötigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

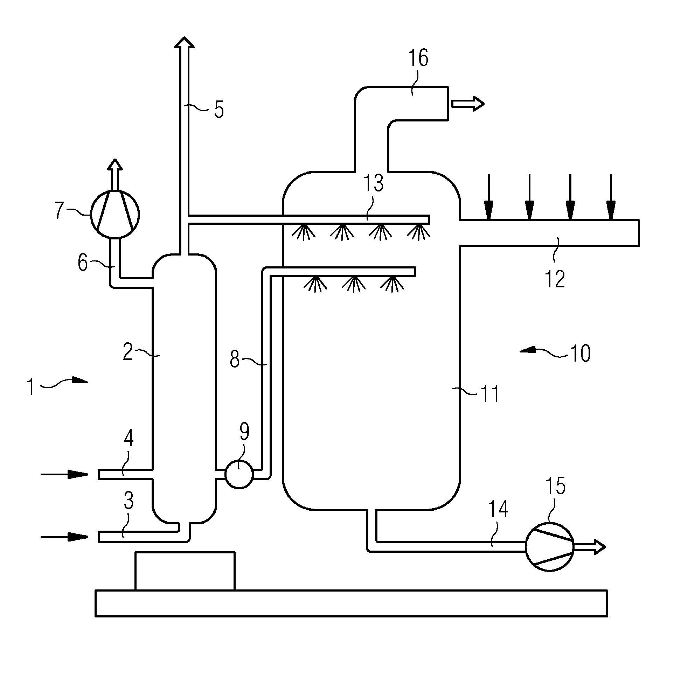

## Patentansprüche

1. Modul für eine thermische Kraftanlage zur Kondensation von Wrasendampf und zur Kühlung von aus einer Turbinenentwässerung stammendem Turbinenabwasser,
mit einer ersten Einheit (1), die ausgebildet ist Wrasendampf zu kondensieren und einer zweiten Einheit (10), welche ausgebildet ist, das Turbinenabwasser zu kühlen, wobei in der ersten Einheit (1) anfallendes Kondensat an die zweite Einheit (10) übergeben werden kann.

2. Modul nach Anspruch 1,
**dadurch gekennzeichnet, dass**
zur Übergabe von Kondensat aus der ersten Einheit (1) in die zweite Einheit (10) eine Kondensatleitung (8) dient, wobei insbesondere ein Kondensomat (9) in der Kondensatleitung (8) vorhanden ist.

3. Modul nach einem der vorhergehenden Ansprüche,
**dadurch gekennzeichnet, dass**
die erste Einheit (1) von Kühlwasser durchströmbar ist, insbesondere von Kühlwasser, das für Standrohre eines Hauptkondensators der thermischen Kraftanlage vorgesehen ist.

4. Modul nach Anspruch 3,
**dadurch gekennzeichnet, dass**
Kühlwasser nach Durchströmung der ersten Einheit (1) in der zweiten Einheit (10) genutzt werden kann,
insbesondere zur Einspritzung (13) in die zweite Einheit (10).

5. Modul nach einem der vorhergehenden Ansprüche,
**dadurch gekennzeichnet, dass**
in der ersten Einheit ein Auslass (6) vorhanden ist, durch den mit dem Wrasendampf in die erste Einheit (1) mitgeführte Luft nach der Kondensation des Wrasendampfs abgeführt werden kann, insbesondere in die Atmosphäre.

6. Modul nach einem der vorhergehenden Ansprüche,
**dadurch gekennzeichnet, dass**
die zweite Einheit (10) einen Einlass (12) für Turbinenabwasser aufweist, welcher insbesondere in einem oberen Bereich der zweiten Einheit (10) angeschlossen ist.

7. Modul nach einem der vorhergehenden Ansprüche,
**dadurch gekennzeichnet, dass**
aus der zweiten Einheit (10) ein Auslass (14) zum Hauptkondensator vorhanden ist, wobei der Auslass (14) insbesondere in einem unteren Bereich der zweiten Einheit (10) angeschlossen ist.

8. Modul nach einem der vorhergehenden Ansprüche,
**dadurch gekennzeichnet, dass**
eine dem Druckausgleich zwischen der zweiten Einheit (10) und dem Hauptkondensator dienende Verbindungsleitung vorhanden ist, wobei die Verbindungsleitung insbesondere im oberen Bereich der zweiten Einheit (10) angeschlossen ist.
